# FASCICULE DE BREVET EUROPEEN

(11) **EP 3 539 873 B1**
(45) Date de publication et mention de la délivrance du brevet: **23.12.2020**
(21) Numéro de dépôt: 19156326.1
(22) Date de dépôt: 11.02.2019
(51) Int. Cl.: B64D 13/06, F02C 7/18

(54) **SYSTÈME DE PROPULSION D'UN AÉRONEF COMPORTANT UN TURBORÉACTEUR DOUBLE FLUX ET UN SYSTÈME DE PRÉLÈVEMENT D'AIR À ENCOMBREMENT RÉDUIT**
ANTRIEBSSYSTEM EINES LUFTFAHRZEUGS, DAS EIN DOPPELFLUSS-TURBOTRIEBWERK UND EIN LUFTENTNAHMESYSTEM MIT GERINGEM PLATZBEDARF UMFASST
PROPULSION SYSTEM OF AN AIRCRAFT COMPRISING A DUAL-FLOW JET ENGINE AND A COMPACT AIR SAMPLING SYSTEM

(30) Priorité: 13.03.2018 FR 1852135
(43) Date de publication de la demande: 18.09.2019
(73) Titulaire: Airbus Operations S.A.S., 31060 Toulouse (FR)
(72) Inventeur: SOULIE, Adeline, 82600 VERDUN SUR GARONNE (FR); GELIOT, Jean, 31400 TOULOUSE (FR)
(74) Mandataire: Gicquel, Olivier Yves Gérard

(56) Documents cités:
- EP-A1- 3 214 289
- EP-A1- 3 232 032
- WO-A1-2015/092251
- US-A1- 2015 175 269

## Description

La présente invention concerne un système de propulsion pour un aéronef comportant un turboréacteur double flux et un système de prélèvement d'air à encombrement réduit. La présente invention concerne également un aéronef comportant au moins un tel système de propulsion.

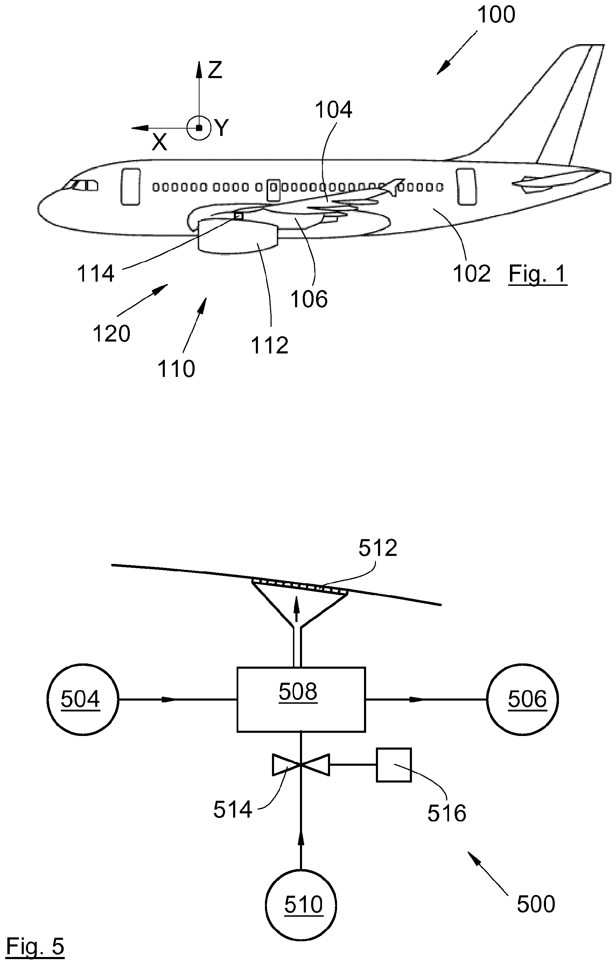

La Fig. 5 montre un schéma représentatif d'un système de prélèvement d'air 500 d'un aéronef selon l'état de la technique. Un tel système de prélèvement 500 est implanté dans un mât sous lequel est attaché un turboréacteur double flux.

Le turboréacteur double flux comporte classiquement un noyau moteur alimenté en air par une soufflante et comportant un étage de compression, un étage de combustion et un étage d'échappement.

Le système de prélèvement d'air 500 prélève de l'air chaud dans le turboréacteur double flux au niveau de l'étage de compression 504 et le délivre à un système d'air 506, comme par exemple, le système d'air conditionné de la cabine de l'aéronef.

Pour réguler la température de l'air chaud ainsi délivré au système d'air 506, l'air provenant de l'étage de compression 504 traverse un échangeur thermique 508 alimenté également avec un air froid prélevé dans la veine secondaire 510 du turboréacteur double flux.

Après avoir traversé l'échangeur thermique 508 et avoir capté des calories dans l'air chaud, l'air froid qui a ainsi été réchauffé est évacué à l'extérieur à travers une grille ajourée 512 disposée à la surface du mât.

Le flux d'air froid provenant de la veine secondaire 510 est régulé par une vanne 514 qui est commandée par un moteur 516 qui commande l'ouverture ou la fermeture de la vanne 514 en fonction des besoins en température du système d'air 506.

Bien qu'une telle installation donne de bons résultats, elle est relativement encombrante, en particulier du fait que les turboréacteurs double flux ont des diamètres de plus en plus importants. En effet, du fait de cet accroissement dimensionnel, le turboréacteur double flux est fixé au plus près de la voilure, ce qui réduit l'espace disponible pour le système de prélèvement.

Le document EP3214289 divulgue un système de propulsion pour un aéronef, selon l'art antérieur. Un objet de la présente invention est de proposer un système de propulsion d'un aéronef comportant un turboréacteur double flux et un système de prélèvement d'air à encombrement réduit.

A cet effet, est proposé un système de propulsion pour un aéronef tel que revendiqué dans la revendication 1.

Le volet permet selon qu'il est ouvert ou fermé, de réguler le flux d'air frais entrant dans l'échangeur thermique et permet un gain de place.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef présentant au moins un système de propulsion selon l'invention,
la Fig. 2 est une représentation schématique d'un système de prélèvement d'air selon l'invention,
la Fig. 3 est une vue en coupe d'un détail du système de prélèvement d'air en position ouverte,
la Fig. 4 est une vue similaire à celle de la Fig. 3, en position fermée, et
la Fig. 5 est une représentation schématique d'un système de prélèvement d'air de l'état de la technique.

Dans la description qui suit, les termes relatifs à une position sont pris en référence à un aéronef en position d'avancement normal, c'est-à-dire comme il est représenté sur la Fig. 1.

La Fig. 1 montre un aéronef 100 qui comporte un fuselage 102 présentant une aile 104 de chaque côté et au moins un système de propulsion 120 comportant un turboréacteur double flux 110 et un mât 106. Le turboréacteur double flux 110 est entouré d'une nacelle et est fixé sous chaque aile 104 par l'intermédiaire du mât 106.

Dans toute la description qui va suivre, par convention, la direction X correspond à la direction longitudinale du turboréacteur double flux 110, cette direction étant parallèle à l'axe longitudinal de l'aéronef 100. D'autre part, la direction Y correspond à la direction orientée transversalement par rapport au turboréacteur double flux 110, et la direction Z correspond à la direction verticale ou à la hauteur, ces trois directions X, Y, Z étant orthogonales entre elles.

Le système de propulsion 120 comporte un carénage 112 qui constitue la peau extérieure du turboréacteur double flux 110 et du mât 106 et qui présente une grille ajourée 114 présentant des trous ici en forme de fentes. Dans le mode de réalisation de l'invention présenté sur la Fig. 1, la grille ajourée 114 est au niveau du mât mais selon un autre mode de réalisation, la grille ajourée peut être au niveau de la nacelle.

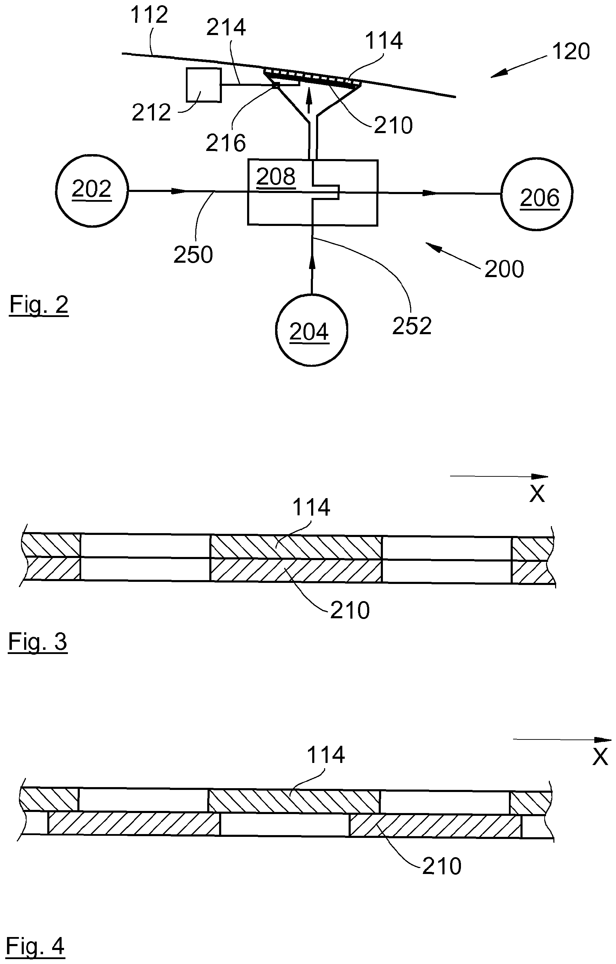

Le turboréacteur double flux 110 comporte un noyau moteur alimenté en air par une soufflante et comportant un étage de compression 202 (Fig. 2), un étage de combustion et un étage d'échappement. Le turboréacteur double flux 110 comporte également une veine secondaire 204 (Fig. 2) alimentée en air par la soufflante et disposée autour du noyau moteur.

La Fig. 2 montre un schéma représentatif d'un système de prélèvement d'air 200 selon l'invention et mis en place dans le système de propulsion 120 de l'aéronef 100.

Le système de prélèvement d'air 200 prélève de l'air chaud dans le turboréacteur double flux 110 au niveau de l'étage de compression 202 et le délivre à un système d'air 206, comme par exemple, le système d'air conditionné de la cabine de l'aéronef 100.

Pour réguler la température de l'air chaud ainsi délivré au système d'air 206, le système de prélèvement d'air 200 comprend un échangeur thermique 208 qui est ainsi alimenté par l'air chaud provenant de l'étage de compression 202 et par un air froid prélevé dans la veine secondaire 204 du turboréacteur double flux 110.

Après avoir traversé l'échangeur thermique 208 et avoir capté des calories dans l'air chaud, l'air froid qui a ainsi été réchauffé est évacué à l'extérieur à travers la grille ajourée 114.

Ainsi, le système de prélèvement d'air 200 comporte une canalisation chaude 250 fluidiquement connectée entre l'étage de compression 202 et le système d'air 206, et traversant l'échangeur thermique 208, et une canalisation froide 252 fluidiquement connectée entre la veine secondaire 204 et la grille ajourée 114, et traversant l'échangeur thermique 208. L'échange thermique qui a lieu dans l'échangeur thermique 208 s'effectue entre l'air froid présent dans la canalisation froide 252 et l'air chaud présent dans la canalisation chaude 250. La canalisation froide 252 s'élargit au niveau de la grille ajourée 114 afin d'englober l'ensemble de la grille ajourée 114.

Pour réguler le flux d'air froid provenant de la veine secondaire 204, le système de prélèvement d'air 200 comporte un volet 210 qui est arrangé au niveau de la grille ajourée 114. Le volet 210 est mobile entre une position ouverte dans laquelle le volet 210 n'obture pas les trous de la grille ajourée 114 et une position fermée dans laquelle le volet 210 obture les trous de la grille ajourée 114. Ainsi, en position ouverte, l'air provenant de l'échangeur thermique 208 traverse la grille ajourée 114 et, en position fermée, l'air provenant de l'échangeur thermique 208 ne traverse pas la grille ajourée 114.

La position du volet 210 est commandée par un moteur 212 qui déplace le volet 210 de la position ouverte à la position fermée et inversement et peut lui faire prendre différentes positions intermédiaires entre ces deux positions extrêmes. Le moteur 212 est commandé par une unité de contrôle de l'aéronef 100 en fonction des besoins en température du système d'air 206.

Lorsque le volet 210 est en position ouverte, l'air provenant de la veine secondaire 204 peut s'évacuer à travers les trous de la grille ajourée 114, et il y a alors création d'un flux d'air de la veine secondaire 204 vers la grille ajourée 114 à travers l'échangeur thermique 208 du fait de la différence de pression entre la pression extérieure et la pression dans la veine secondaire 204.

A l'inverse, lorsque le volet 210 est en position fermée, l'air provenant de la veine secondaire 204 n'a pas de débouché pour s'évacuer, et il n'y a donc aucun flux d'air dans l'échangeur thermique 208.

L'intégration de la fonction d'évacuation et de régulation au niveau de la grille ajourée 114 permet un gain de place, ce qui facilite l'intégration du système de prélèvement d'air 200 dans le système de propulsion 120. En particulier, il est possible d'éloigner l'échangeur thermique 208 de l'aile 104, ce qui limite l'impact de l'air provenant de la grille ajourée 114 sur l'aile 104, et l'accès au système de prélèvement d'air 200 est facilité puisqu'il est accessible directement par retrait du capot constituant la grille ajourée 114.

La Fig. 3 montre le volet 210 en position ouverte et n'obturant pas les trous de la grille ajourée 114 et la Fig. 4 montre le volet 210 en position fermée et obturant les trous de la grille ajourée 114.

Selon le mode de réalisation de l'invention présenté ici, le volet 210 est monté mobile en translation entre la position ouverte et la position fermée, selon une direction parallèle à l'axe longitudinal x. La translation du volet 210 est réalisée par tous systèmes à glissières appropriés.

Pour limiter l'impact du volet 210, celui-ci est disposé du côté intérieur de ladite grille ajourée 114.

Bien sûr, il est possible de prévoir un déplacement différent du volet 210 comme par exemple un déplacement en rotation ou en translation selon une direction différente.

Dans le mode de réalisation de l'invention présenté à la Fig. 2, le moteur 212 est relié au volet 210 par une tringle 214 qui transmet les mouvements du moteur 212 au volet 210. Ici, le moteur 212 est disposé à l'extérieur de la canalisation froide 252, et pour éviter les fuites d'air sortant de l'échangeur 208 vers les zones adjacentes, un système d'étanchéité 216, par exemple à soufflet, est installé à la traversée de la paroi de la canalisation froide 252 par la tringle 214 afin de garantir l'étanchéité autour de la tringle 214.

Si le moteur 212 est disposé à l'intérieur de la canalisation froide 252, en particulier au niveau de son élargissement au voisinage de la grille ajourée 114, il n'est pas nécessaire de prévoir que la tringle traverse la paroi de la canalisation froide 252, ni un système d'étanchéité.

## Revendications

1. Système de propulsion (120) pour un aéronef (100) comportant un système d'air (206), ledit système de propulsion (120) comportant :
- un carénage (112) présentant une grille ajourée (114),
- un turboréacteur double flux (110) avec un étage de compression (202) et une veine secondaire (204), et
- un système de prélèvement d'air (200) comportant :
- un échangeur thermique (208),
- une canalisation chaude (250) fluidiquement connectée entre l'étage de compression (202) et le système d'air (206), et traversant l'échangeur thermique (208),
- une canalisation froide (252) fluidiquement connectée entre la veine secondaire (204) et la grille ajourée (114), et traversant l'échangeur thermique (208),
le système de propulsion (120) étant **caractérisé en ce que** le système de prélèvement d'air (200) comporte un volet (210) qui est arrangé au niveau de la grille ajourée (114) et qui est déplacé par un moteur (212) entre une position ouverte dans laquelle le volet (210) n'obture pas les trous de la grille ajourée (114) et une position fermée dans laquelle le volet (210) obture les trous de la grille ajourée (114).

2. Système de propulsion (120) selon la revendication 1, **caractérisé en ce que** le volet (210) est monté mobile en translation contre la grille ajourée (114) du côté intérieur de ladite grille ajourée (114).

3. Système de propulsion (120) selon la revendication 2, **caractérisé en ce que** le moteur (212) est disposé à l'extérieur de la canalisation froide (252), **en ce que** le système de propulsion (120) comporte une tringle (214) qui transmet les mouvements du moteur (212) au volet (210) et **en ce que** le système de propulsion (120) comporte un système d'étanchéité (216) installé à la traversée de la paroi de la canalisation froide (252) par la tringle (214).

4. Aéronef (100) comportant un système d'air (206) et au moins un système de propulsion (120) selon l'une des revendications précédentes.

## Patentansprüche

1. Antriebssystem (120) für ein Luftfahrzeug (100), aufweisend ein Luftsystem (206), wobei das Antriebssystem (120) Folgendes aufweist:
- eine Verkleidung (112), die ein gelochtes Gitter (114) aufweist,
- ein Zweistromstrahltriebwerk (110) mit einer Druckstufe (202) und einem Nebenstrom (204) und
- ein Luftentnahmesystem (200), das Folgendes aufweist:
- einen Wärmetauscher (208),
- eine warme Leitung (250), die fluidisch zwischen der Druckstufe (202) und dem Luftsystem (206) verbunden ist und durch den Wärmetauscher (208) geht,
- eine kalte Leitung (252), die fluidisch zwischen dem Nebenstrom (204) und dem gelochten Gitter (114) verbunden ist und durch den Wärmetauscher (208) geht,
wobei das Antriebssystem (120) **dadurch gekennzeichnet ist, dass** das Luftentnahmesystem (200) eine Klappe (210) aufweist, die an dem gelochten Gitter (114) angeordnet ist und die durch einen Motor (212) zwischen einer offenen Position, in der die Klappe (210) die Löcher des gelochten Gitters (114) nicht abdeckt, und einer geschlossenen Position, in der die Klappe (210) die Löcher des gelochten Gitters (114) abdeckt, verschoben wird.

2. Antriebssystem (120) nach Anspruch 1, **dadurch gekennzeichnet, dass** die Klappe (210) translatorisch beweglich gegen das gelochte Gitter (114) an der Innenseite des gelochten Gitters (114) montiert ist.

3. Antriebssystem (120) nach Anspruch 2, **dadurch gekennzeichnet, dass** der Motor (212) außerhalb der kalten Leitung (252) angeordnet ist, dass das Antriebssystem (120) eine Stange (214) aufweist, die die Bewegungen des Motors (212) an die Klappe (210) überträgt, und dass das Antriebssystem (120) ein Dichtungssystem (216) aufweist, das dort installiert ist, wo die Stange (214) durch die Wand der kalten Leitung (252) geht.

4. Luftfahrzeug (100), aufweisend ein Luftsystem (206) und mindestens ein Antriebssystem (120) nach einem der vorhergehenden Ansprüche.

## Claims

1. Propulsion system (120) for an aircraft (100) comprising an air system (206), said propulsion system (120) comprising:
- a fairing (112) having an openwork grille (114),
- a turbofan engine (110) having a compression stage (202) and a secondary duct (204), and
- an air bleeding system (200) comprising:
- a heat exchanger (208),
- a hot pipe (250) that is fluidically connected between the compression stage (202) and the air system (206), and passing through the heat exchanger (208),
- a cold pipe (252) fluidically connected between the secondary duct (204) and the openwork grille (114), and passing through the heat exchanger (208),
the propulsion system (120) being **characterized in that** the air bleeding system (200) comprises a flap (210) that is arranged at the openwork grille (114) and that is moved by a motor (212) between an open position in which the flap (210) does not block the holes of the openwork grille (114) and a closed position in which the flap (210) blocks the holes of the openwork grille (114).

2. Propulsion system (120) according to Claim 1, **characterized in that** the flap (210) is mounted so as to be able to move in translation against the openwork grille (114) on the inner side of said openwork grille (114) .

3. Propulsion system (120) according to Claim 2, **characterized in that** the motor (212) is arranged outside the cold pipe (252), **in that** the propulsion system (120) comprises a rod (214) that transmits the movements of the motor (212) to the flap (210) and **in that** the propulsion system (120) comprises a sealing system (216) installed at the point where the rod (214) passes through the wall of the cold pipe (252).

4. Aircraft (100) comprising an air system (206) and at least one propulsion system (120) according to one of the preceding claims.
